# EUROPEAN PATENT APPLICATION

(11) **EP 2 711 741 A1**
(43) Date of publication of application: **26.03.2014**
(21) Application number: 11865942.4
(22) Date of filing: 17.05.2011
(51) Int. Cl.: G02B 1/11, B32B 9/00, G02B 1/10, G02C 7/02

(54) **OPTICAL ELEMENT AND MANUFACTURING METHOD THEREOF**

(71) Applicant: Itoh Optical Industrial Co., Ltd., Gamagori-shi, Aichi 443-0041 (JP)
(72) Inventor: SAITO, Yuji, Gamagori-shi Aichi 443-0041 (JP); SHIMIZU, Takehiro, Gamagori-shi Aichi 443-0041 (JP); ODA, Hirofumi, Gamagori-shi Aichi 443-0041 (JP); KATO, Hirohisa, Gamagori-shi Aichi 443-0041 (JP)
(74) Representative: Vossius & Partner
(86) International application number: PCT/JP2011/061282
(87) International publication number: WO 2012/157072

(57) **Abstract**

The present invention relates to an optical element which comprises a multi-layer antireflective film (optical inorganic thin film) (16) on an optical element substrate (10). A first layer (starting from the closest side to the optical element substrate: the same shall apply hereafter.) of the optical inorganic thin film is a vapor-deposited film (hereinafter called "specified vapor-deposited film") composed of either 1) a mixture or compound of La oxide and Ti oxide, or 2) a mixture or compound of La oxide and Ta oxide and shows a refractive index n_{D}=1.95-2.25. In addition, a final layer is to be a vapor-deposited film comprising SiO₂, and a middle layer composed of a single or multi-layered vapor-deposited film which comprises one metal oxide selected from a group consisting of ITO (indium tin oxide) and oxides of Group 4 and 5 elements in the fourth to sixth periods is included in the inner side of the final layer. This optical element hardly develops initial swelling while a high degree of heat resistance is maintained.

## Description

### Technical Field

The present invention relates to an optical element comprising optical inorganic thin films such as an antireflective film (reflection-reducing film) and a mirror film (reflection-amplifying film), and a manufacturing method thereof. Here, the optical inorganic thin films will be explained by exemplifying mainly the antireflective film or the mirror film, but they can be applied to any case where a single-layer or multi-layer optical inorganic thin film is formed to increase or decrease a reflectance, for example, a case of an interference filter, or the like.

### Background Art

Conventionally, the optical element in which an optical inorganic thin film such as an antireflective film and a mirror film is formed on a plastic substrate as an optical element substrate has been well known.

For example, Patent Literatures 1 to 4 propose various optical elements which individually have, on a plastic substrate (organic glass), an antireflective film (optical inorganic thin film) composed of a high-index layer with a basic film thickness of λ/4 primarily comprising inorganic substances such as silicon dioxide (SiO₂), titanium dioxide (TiO₂), tantalum oxide (Ta₂O₅), yttrium oxide (Y₂O₃) and alumina (Al₂O₃).

However, in relation to the optical element comprising the antireflective film or the like (optical inorganic thin film) on the plastic substrate, heating temperature in vapor deposition during formation of the antireflective film is restricted. Thus, the antireflective film cannot expect to have heat resistance as in an inorganic glass.

That is, when the plastic substrate (plastic lens) having such an antireflective film or the like is left in a place where an atmospheric temperature is high like the inside of a car, a crack is likely to occur on the antireflective film or the like. In addition, when a crack occurs on the antireflective film or the like, the appearance of the plastic lens is impaired.

Furthermore, because of the crack (also called crazing or stress crack), a thin film (multi-layer film) on the plastic substrate was easily peeled away from any of the antireflective film or the like, or a primer film (primer coat) and a hard film (hard coat) which were present between the antireflective film or the like and the plastic substrate.

In addition, in a case of an optical apparatus such as a projector and a DVD player, the same problems as above were likely to occur by a crack caused on the antireflective film due to heat generated from outside or inside.

Thus, the inventors proposed an optical element constituted as below in Patent Literature 5.

"In an optical element comprising a multi-layered optical inorganic thin film which decreases or increases the reflectance on the plastic substrate, the optical inorganic thin film characteristically comprises a sintered mixture which consists only or mainly of the following compositions.

33-74 mass% of titanium oxide (TiOx: ₓ=1.5-1.8),
19-65 mass% of lanthanum oxide (La₂O₃),
2-7 mass% of titanium (Ti)"

The heat resistance is improved by forming a vapor-deposited film with a material containing the aforementioned lanthanum oxide (La oxide) (Comparative Example 1). However, it has been found that swelling (partial superficial swollenness) is likely to occur (particularly in a high-index plastic substrate) at an early stage after film formation with the La oxide-based material (e.g. 10 days later). This initial swelling is attributed to a composite film on a substrate (usually comprising a primer coat, a hard coat and a vapor-deposited film) being stressed from the vapor-deposited film.

### Citation List

### Patent Literature

Patent Literature 1: JP No. H02-291501 A
Patent Literature 2: JP No. H04-328501 A
Patent Literature 3: JP No. 2002-328201 A
Patent Literature 4: JP No. 2003-202407 A
Patent Literature 5: JP No. 2005-234188 A

### Disclosure of the Invention

### Problems to be Solved by the Invention

In light of the above description, the object of the present invention is to provide an optical element comprising an optical inorganic thin film in which initial swelling is prevented while a high degree of heat resistance is maintained.

### Means for Solving the Problems

As a result of an earnest effort in the development for solving the problems, the inventors arrived at an optical element comprising an optical inorganic thin film composed of an antireflective film (reflection-reducing film) or a mirror film (reflection-amplifying film) as constituted below.

The optical element which comprises a multi-layer optical inorganic thin film on an optical element substrate in order to decrease or increase its reflectance is characterized by the fact that a first layer (starting from the closest side to the optical element substrate: the same shall apply hereafter.) of the optical inorganic thin film is a vapor-deposited film (hereinafter called "specified vapor-deposited film") composed of either 1) a mixture or compound of La oxide and Ti oxide, or 2) a mixture or compound of La oxide and Ta oxide and shows a refractive index n=1.95-2.25, and that the final layer is to be a vapor-deposited film comprising SiO₂, and a middle layer composed of a single or multi-layered vapor-deposited film which comprises one metal oxide selected from a group consisting of ITO (indium tin oxide) and oxides of Group 4 and 5 elements in the fourth to sixth periods is included in the inner side of the final layer.

The specified vapor-deposited film comprising the La oxide-containing material is constructed of only the first layer, thereby the optical element can obtain a higher degree of heat resistance compared to conventional optical elements, as shown in the following tests.

In the aforementioned constitution, the mixture or compound of the La oxide and the Ti oxide is desirably represented by:
1) TiOₓ + z (La₂O₃) (wherein x is 1.5-1.8, and z is 10-65 mass% to the total mass of the mixture),
2) LaTi₍₁₊ₓ₎O_{(3-y)} (wherein 0<x≤0.2, 0.3≤y≤0.7),
3) LaₘTaₙOₓ (multiple oxide).

Although not necessarily, usually on the optical substrate, the optical inorganic thin film is formed on the hard coat via, or not via the primer coat, and additionally a surface protective film is formed as a finishing composite film.

The primer coat is preferably composed of a primer composition based on a urethane or polyester thermoplastic elastomer (TPE). The heat resistance (crack resistance) of the finishing composite film can be expected to be improved by cooperation with the specified vapor-deposited film.

Additionally, in the aforementioned constitution, the hard coat is desirably composed of a hard coat composition prepared by adding a catalyst and a metal oxide microparticle (composite microparticle) to a hydrolysate of organoalkoxysilane. The additional heat resistance (crack resistance, swelling resistance) of the finishing composite film can be expected to be improved.

In the aforementioned each constitution, an oil and water repellent surface protective film is desirably provided on the optical inorganic thin film. Waterproof property and antifouling property can be given.

In addition, as the surface protective film, a general-purpose product (e.g. KP-801 M produced by Shin-Etsu Chemical Co., Ltd.) can be used, however, the film is desirably composed of a fluorine organic group-introduced silane compound which has a silyl group reactive with a fluorine-modified organic group. This has more preferable lubricity compared to general-purpose surface protective films, and abrasion resistance of its surface is also improved. It should be noted that the film thickness of the surface protective film is usually 0.001-0.05 µm.

Manufacturing method of the surface protective film includes the following 1) dry processing method (dry coating method) and 2) wet processing method (wet coating method).

1) Dry processing method: A surface protective agent consisting mainly of a fluorine-based silane compound is applied to a mass of a fibrous conductive substance, and heated under vacuum at 1-0.0001 Pa, thereby applied on the optical element having no surface protective film to form a surface protective film.

This dry processing method facilitates acquisition of the surface protective film having preferable adhesiveness and excellent leveling property (smoothness), allows continuous formation of the surface protective film by using the same vacuum chamber, and is excellent in productivity/efficiency compared to the wet processing method mentioned below.

2) Wet processing method: In the other one of the manufacturing methods of the surface protective film, the same surface protective agent is applied on the optical element having no surface protective film, and then left under an atmosphere at a humidity (RH) of 10-90% and at a temperature of 10-60°C for a predetermined time to form a surface protective film.

This wet processing method is suitable for a case where the surface protective film is formed on a large-scale (large-area) substrate or an intricately-shaped substrate in the atmosphere.

Although the present invention as an optical substrate can also be applied to an inorganic substrate (inorganic glass substrate), it is remarkably effective and preferable to apply the invention to a plastic substrate (organic glass substrate) requiring heat resistance.

### Brief Description of Drawings

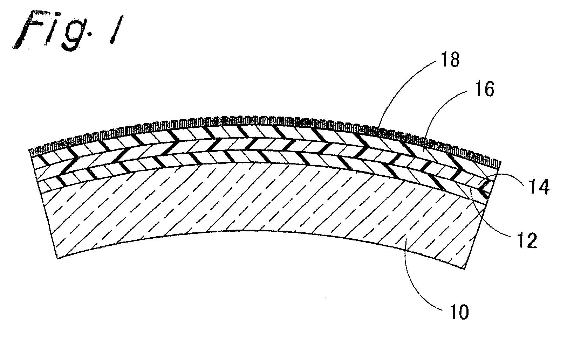

[Figure 1] Fig. 1 represents a model sectional view of the optical element to which the present invention is applied.

### Best Mode for Carrying Out the Invention

Hereinafter, an embodiment (constitution) of the present invention will be detailed.

Here, although a transparent plastic substrate such as an organic glass substrate is usually used as an optical element substrate, a transparent inorganic substrate such as an inorganic glass substrate can also be used. Furthermore, an opaque plastic substrate and an inorganic substrate (ceramic, metal) can also be used.

In addition, the optical element also includes an optical lens such as a spectacle lens and a camera lens, a front glass or a front filter of various displays, furthermore, an optical prism, various mirrors and the like.

The organic glass may include polymethylmethacrylate (PMMA), polycarbonate (PC), polyethylene terephthalate (PET: polyester), polyurethane, aliphatic allyl carbonate resin, aromatic allyl carbonate resin, polythiourethane, episulphide resin, norbornene resin, polyimide, polyolefins and the like.

More specifically, "CR-39" (aliphatic allyl carbonate resin produced by PPG Co., n_{D}: 1.50), "MR-20" (polythiourethane produced by Mitsui Chemicals, Inc., n_{D}: 1.60), "MR-10" (polythiourethane produced by Mitsui Chemicals, Inc., n_{D}: 1.67), "MR-174" (episulphide resin produced by Mitsui Chemicals, Inc., n_{D}: 1.74) and the like can be preferably used.

As the inorganic glass, glasses in which refractive index (n_{D}) of 1.55 or higher can be easily obtained, for example, a barium crown glass (BaK) 1.54-1.60, a dense crown glass (SK) >1.54, a highly dense crown glass (SSK) >1.60, a light barium flint (BaLF) >1.55, a barium flint (BaF) >1.56, a dense barium flint (BaSF) >1.585, and the like are preferable. It should be noted that the number following each abbreviation of the plastic and inorganic glasses represents a refractive index (n_{D}) of each substrate (glass).

In addition, in a case of the organic glass substrate, a hard coat film (1) is usually formed in light of the abrasion resistance, and when the hard coat film (1) is formed, a primer layer (2) is inserted between the substrates to enhance the shock resistance.

Although the hard coat (composition) is not particularly restricted if it is any composition capable of providing the abrasion resistance or the like on the glass surface, the following silicones (i) or acrylics (ii) coat can be preferably used.

### (i) Silicone hard coat;

For example, a catalyst and a metal oxide microparticle (including composite microparticles) are added to a hydrolysate of organoalkoxysilane, and its viscosity is adjusted to an extent allowing application by a diluting solvent. Furthermore, a surfactant, an ultraviolet absorber or the like can also be optionally added to this hard coat liquid.
1) As the organoalkoxysilane, a compound represented by the following general formula can be used.

   R1ₐR2_{b}Si(OR3)_{4-(a+b)}

   (wherein R1 is an alkyl group, a vinyl group, an epoxy group, a methacryloxy group or a phenyl group which have 1 to 6 carbon atoms, R2 is a hydrocarbon group, a hydrocarbon halide group or an aryl group which have 1 to 3 carbon atoms, and R3 is an alkyl group or an alkoxyalkyl group which have 1 to 4 carbon atoms. In addition, a=0 or 1, b=0, 1 or 2).
   Specifically, it may include tetramethoxysilane, methyl trimethoxysilane, vinyl trimethoxysilane, γ-methacryloxypropyl trimethoxysilane, trimethylchlorosilane, glycidoxymethyl trimethoxysilane, α-glycidoxyethyl trimethoxysilane, β-glycidoxyethyl trimethoxysilane, γ-glycidoxypropyl trimethoxysilane, γ-glycidoxypropylmethyl diethoxysilane and the like. Each of them can be used alone, and furthermore, two or more of them can be combined.
2) As the catalyst, an organic carboxylic acid such as trimellitic acid, anhydrous trimellitic acid, itaconic acid, pyromellitic acid and anhydrous pyromellitic acid, a nitrogen-containing organic compound such as methylimidazole and dicyandiamide, a metal alkoxide such as titanalkoxide and zirconium alkoxide, a metal complex such as acetylacetone aluminum and acetylacetone iron (III), and an alkali metal organic carboxylate such as sodium acetate and potassium acetate can be used.
3) As the metal oxide microparticle, colloidal silica, colloidal titania, colloidal zirconia, colloidal cerium oxide (IV), colloidal tantalum oxide (V), colloidal tin oxide (IV), colloidal antimony oxide (III), colloidal alumina, colloidal iron oxide (III) and the like which have an average particle size of 5-50 nm can be used. Each of them can be used alone, and furthermore, two or more of them can be combined, alternatively, they can also be used as a composite microparticle.
4) As the diluting solvent, a polar solvent such as alcohols, ketones, esters, ethers and cellosolves can be preferably used.
5) A coating method is selected from conventional methods such as a dipping method and a spin coat method. As a curing condition, the temperature is 80 to 140°C, and the duration is 1 to 4 hours.

### (ii) Acrylic hard coat;

For example, a multifunctional acrylic oligomer/monomer having three or more acryloyloxy groups in one molecule to which a monomer/oligomer having a desired function and a photopolymerization initiator are added is used as an essential component. If needed, additives such as a polymerization inhibitor, a leveling agent and an ultraviolet absorber, as well as a modifier such as a thermoplastic resin and a metal oxide microparticle can also be added. And in the following sentences, "(meth)acrylate" means either acrylate or methacrylate.
1) The multifunctional acrylic oligomer/monomer is a compound which has three or more acryloyloxy groups in one molecule and can be exemplified by the following compounds.
   Polyol acrylate ((meth)acrylate of a polyhydric alcohol or a polyether-type polyhydric alcohol): trimethylolpropane triacrylate, ditrimethylolpropane tetraacrylate, pentaerythritol triacrylate, pentaerythritol tetramethacrylate, dipentaerythritol pentaacrylate and the like.
   Polyester acrylate ((meth)acrylate of a polyester obtained by reacting three components of a polybasic acid, a polyhydric alcohol and an acrylic acid): for example, phthalic acid, isophthalic acid, tetrahydrophthalic acid or the like can be representatively used as the polybasic acid, and trimethylolpropane, pentaerythritol or the like can be representatively used as the polyhydric alcohol.
   Urethane acrylate (obtained by reacting three components of a trivalent or more polyol component, a trivalent or more polyisocyanate or polyol polyisocyanate and a hydroxyl group-containing multifunctional (meth)aclate): for example, trimethylolpropane or the like can be representatively used as the polyol compound, burette or trimer of HMDI can be representatively used as the polyisocyanate, and the polyol acrylate such as pentaerythritol triacrylate can be representatively used as the hydroxyl group-containing multifunctional (meth)aclate.
   Epoxy acrylate (obtained by reacting an epoxy compound with a (meth)acrylic acid and a hydroxyl group-containing (meth)acrylate): glycerin triglycidyl ether triacrylate, tris (glycidyl ether ethyl) isocyanurate triacrylate, pentaerythritol tetraglycidyl ether tetraacrylate, phenolic novolac polyglycidyl ether polyacrylate, trimethylolpropane polyglycidyl ether polyacrylate and the like.
   Others: tris acryloyloxy isocyanurate, aminopolyacrylate, hexakis methacryloyloxy ethylphosphazene, tris acryloyloxyethyl isocyanurate and the like.
2) As the photopolymerization initiator, the following exemplary compounds can be used.
   Acetophenones: 4-phenoxy dichloroacetophenone, 4-t-butyl-dichloroacetophenone, 4-t-butyl-trichloroacetophenone, diethoxy acetophenone, 2-hydroxy-2-methyl-1-phenylpropane-1-one, 1-(4-isopropylphenyl)-2-hydroxy-2-methylpropane-1-one, 1-(4-dodecylphenyl)-2-hydroxy-2-methylpropane-1-one, 4-(2-hydroxyethoxy)-phenyl (2-hydroxy-2-propyl) ketone, 1-hydroxycyclohexyl phenyl ketone, 2-methyl-1-[4-(methylthio)phenyl]-2-morpholinopropane-1, and the like.
   Benzoins: benzoin, benzoin methyl ether, benzoin ethyl ether, benzoin isopropyl ether, benzoin isobutyl ether, benzyl methyl ketal and the like.
   Benzophenones: benzophenone, benzoylbenzoic acid, methyl benzoylbenzoic acid, 4-phenylbenzophenone, hydroxybenzophenone, acrylated benzophenone, 4-benzoyl-4'-methyldiphenyl sulfide, 3,3'-dimethyl-4-methoxybenzophenone and the like.
   Thioxanthones: thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and the like.
   Special group: α-acyloxime ester, acyl phosphine oxide, methylphenyl glyoxylate, benzyl-9,10-phenanthrenequinone, camphorquinone, dibenzosuberone, 2-ethyl anthraquinone, 4',4"-diethylisophthalophenone, 3,3',4,4'-tetra (t-butylperoxycarbonyl) benzophenone and the like.
   At this time, a photopolymerization initiator aid such as triethanolamine, methyldiethanolamine, triisopropanolamine, 4,4'-dimethylamino benzophenone (michler ketone), 4,4'-dimethylamino benzophenone, 2-dimethylaminoethylbenzoic acid can be combined.
   A concentration of the photopolymerization initiator aid is 0.5-10 wt%, preferably 1-7 wt% to a curable resin.
3) As the polymerization inhibitor, the following exemplary compounds can be used.
   Hydroquinone, methoquinone, p-benzoquinone, phenothiazine, mono-t-butylhydroquinone, catechol, p-t-butylcatechol, benzoquinone, 2,5-di-t-butylhydroquinone, anthraquinone, 2,6-di-t-butylhydroxytoluene and the like.
4) As the leveling agent, agents based on hydrocarbon, silicone or fluorine can be used.
5) As the ultraviolet absorber, agents based on hydroxybenzophenone, salicylate, benzotriazole, hindered amine or the like can be used.
6) The thermoplastic resin may include a polyurethane elastomer, a polybutadiene elastomer, an acrylonitrile/butadiene elastomer and the like.
7) As the metal oxide microparticle and the diluting solvent, the same as listed in the case of the silicone hard coat can be used.

Also the coating method is the same as in the case of the silicone hard coat.

As a curing condition, the duration is 2 to 180 sec., under an ultraviolet source from a high-pressure mercury lamp or a metal halide lamp having a bulb wall loading of 80 to 160 W/cm.

(2) The primer layer is desirably formed by using a primer particularly based on a thermoplastic elastomer having an excellent shock resistance.

Specifically, 1) a TPU primer composition prepared by adding a metal oxide microparticle to a urethane-based thermoplastic elastomer (TPU), and 2) a TPEE primer composition prepared by adding the same metal oxide microparticle as described above to a film-forming polymer which consists only or mainly of an ester-based thermoplastic elastomer (TPEE) can be preferably used.
1) TPU is composed of a soft segment comprising a long-chain polyol and polyisocyanate and of a hard segment comprising short-chain polyol and polyisocyanate, and is desirably in the form of water-based emulsion (milky liquid) during addition.
   As the metal oxide microparticle, one used for the hard coat can be used.
2) TPEE is a multiblock copolymer in which polyester is used for the hard segment and polyether or polyester is used for the soft segment, and a mass ratio of the hard segment to soft segment is usually about 30:70 to 10:90.
   The same metal oxide microparticle as in the urethane primer is used for adjusting the refractive index.
(3) In addition, in this embodiment, a single- or multi-layer optical inorganic thin film is formed on the hard coat to decrease or increase the reflectance. That is, an antireflective film and a mirror film are formed.

Additionally, in this embodiment, in the optical element comprising the single-or multi-layer optical inorganic thin film for decreasing or increasing the reflectance on a plastic substrate, it is a first special technical feature (STF) that a first layer (starting from the closest side to the optical substrate: the same shall apply hereafter.) of the optical inorganic thin film is a vapor-deposited film (hereinafter called "specified vapor-deposited film") composed either of 1) a mixture or compound of La oxide and Ti oxide, or 2) a sintered mixture or compound of La oxide and Ta oxide, and has a refractive index n=1.95-2.25.

As the mixture or compound, specifically, the following a) and b) or the like can be used for 1), and the following c) or the like can be used for 2).
a) a compound represented by TiOx + z (La₂O₃) (wherein x is 1.5-1.8, and z is 10-65 wt% to the total mass of the mixture) (see JP No. 2002-226967 A).
   Further specifically, a compound prepared by the process "a mixture of 37.9 mass% of titanium oxide, 58.9 mass% of lanthanum oxide and 3.2 mass% of titanium was homogeneously mixed, granulated to about 1-4 mm in particle size, and burnt under reduced pressure at about 1500°C for 6h" (the same patent publication, "Example 1 "), a compound prepared by the process "a mixture of 34 mass% of titanium oxide, 63 mass% of lanthanum oxide and 3.0 mass% of titanium was homogeneously mixed, granulated to about 1-4 mm in particle size, and burnt under reduced pressure at about 1500°C for 6h" (the same patent publication, "Example 2") or the like, can be preferably used.
   More preferably, those commercially available from Merck KGaA under the trade name of "Substance H4" and "Substance H5" can be used.
   It should be noted that the temperature of the substrate in vapor deposition in Examples 1 and 2 of the publication ranges from 280 to 310°C, and thus is not intended for a plastic substrate.
b) a compound represented by LaTi₍₁₊ₓ)O_{(3-y)} (wherein 0<x≤0.2, 0.3≤y≤0.7) (see JP No. H11-264068 A).
   Further specifically, a compound prepared by the process "3/2 mol of La₂O₃ and 3.1 mol of TiO₂ which were heat-treated at 800°C in the atmosphere for 4 hours were mixed with IPA by a ball mill for 3 hours. It was dried, and then press-molded so that the diameter was 25 mm and the thickness was 15 mm, which was burnt at 95°C in the atmosphere for 8 hours" (the same patent publication, "Example 1 "), and a compound which was burnt in the same process in Example 1, wherein the La₂O₃ was 3 mol and TiO₂ was 3.2 mol (the same patent publication, "Example 2"), can be used.
c) a compound represented by LaₘTaₙOₓ (multiple oxide).

In addition, the first layer is composed of the specified vapor-deposited film, the final layer is composed of SiO₂, and on the inside of the final layer, the middle layer composed of single-layer or multi-layer vapor-deposited films other than the specified vapor-deposited film, which comprises one metal oxide selected from a group consisting of ITO (indium tin oxide) and oxides of Group 4 and 5 elements in the fourth to sixth periods is combined to form an antireflective film (reflection-reducing film) or a mirror film (reflector: reflection-amplifying film).

Design of the antireflective film is usually conducted by selecting the integral multiple of λ/4 (e.g. λ: 500 nm) for an optical film thickness, calculating a required refractive index from the non-reflective conditions, and replacing with a layer comprising a material with this refractive index or a film equal to a multi layer (see "Optical Engineering Handbook" edited by Oze et al., Asakura Publishing Co., Ltd., 1996. 2, p. 170).

Additionally, in design of the mirror film, the multi-layer film is constructed so that a transparent layer with a high index and a layer with a low index of λ/4 are alternately laid (see the same book, p.171).

Here, the optical inorganic thin film material other than the formation material of the specified vapor-deposited film (vapor deposition material for manufacturing the high-index optical layer) may include:
an inorganic oxide which comprises any one of or plurality of Ti, Ta, Zr, Nb, Sb, Y, In, Sn, Ce, Mg, Al and Si,
an inorganic halide such as Mg, La, Al and Li,
a single metal such as Si, Ge, Cr, Al, Au, Ag, Cu, Ni, Pt or the like, or a metal mixture (including a sintered material, an alloy) which comprises any one of or plurality of them.

The antireflective film and the mirror film are usually formed by a dry plating method (PVD method) such as vacuum vapor deposition (including ion-assisted deposition), sputtering, ion plating and arc discharge.

In addition, one layer or plural layers of the antireflective film or the mirror film may be vapor-deposited (film formation) by ion-assisted deposition.

When the specified vapor-deposited film is formed on an organic glass, it is preferable that the glass is put into a vacuum container heated to below 120°C, and heated while O₂ gas or air is optionally introduced and the pressure is adjusted to 5.0x10⁻¹ to 5.0x10⁻³ Pa, and additional film formation is carried out while ion-assisting with O₂ gas, Ar gas, or an O₂/Ar mixed gas by an ion gun.

When the specified vapor-deposited film is formed on an organic glass (organic substrate), the heating temperature in a vacuum vapor deposition chamber is set to 25-120°C (desirably 50-90°C). In a case of a temperature of below 25°C, a density of the formed film is low, resulting in insufficient film durability, and in a case of a temperature of above 120°C, deterioration/deformation of the substrate for film formation may be caused.

In relation to an amount of gas introduced into the ion gun, the film formation is under a condition; in a case of O₂ gas or Ar gas alone, O₂: 1-20 sccm (desirably 5-20 sccm), and in a case of O₂/Ar mixed gas, O₂: 1-20 sccm (desirably 5-15 sccm) and Ar: 1-20 sccm (desirably 5-15 sccm), and accelerating voltage of the ion gun: 100-1200 V (desirably 300-1000V).

Here, the "sccm" is an abbreviation for "standard cc/m" in a condition at 0°C and 101.3 kPa (1 atm).

Prior to the ion-assisted deposition, a surface of the hard coat film is desirably processed. Specifically, the process may include (1) plasma processing under oxygen or argon atmosphere, (2) chemical processing by acid/alkali, (3) ion irradiation processing (ion cleaning) by an ion gun of O₂ gas alone, Ar gas alone, or O₂/Ar mixed gas, and the like. Above all, the ion cleaning is desirable.

It should be noted that the ion cleaning and ion-assisted deposition are described in detail in JP No. H10-123301 A, JP No. H11-174205 A and the like.
1) Ion cleaning:
   When an optical inorganic thin film is formed, a surface of the hard coat film is desirably processed as pretreatment in order to enhance adhesiveness of the optical inorganic thin film. As specific examples, plasma processing at high frequencies under oxygen or argon atmosphere, chemical processing by acid/alkali, oxygen or argon ion irradiation processing by an ion gun may be included.
   Above all, the oxygen or argon ion irradiation processing by the ion gun is desirable for obtaining a preferable surface. (see JP No. H10-123301 A)
2) Ion-assisted deposition:
   At least, the film of the high-index layer is formed by the ion beam-assisted deposition, and other films may also be formed by the ion beam-assisted deposition or other physical deposition. (see JP No. H11-174205 A)
   In addition, other constructive layers of the antireflective film or the mirror film other than the specified vapor-deposited film may be formed by the same ion-assisted deposition as in the case of the specified vapor-deposited film, or other vacuum vapor deposition like an electron beam. Usually, an electron beam is desirable because the same vacuum chamber can be used.

Refractive indexes (n_{D}) of each vapor-deposition material are shown below (except for the previously indicated materials).

Specified vapor-deposited film: 1.95-2.25
SiO₂: 1.43-1.47
TiO₂: 2.2-2.4
ZrO₂: 1.90-2.1
Ta₂O₅: 2.0-2.3
ITO: 2.0

In addition, examples of design for the optical inorganic thin film are shown in Tables 1-1, 1-2, 1-3.

**[Table 1-1]**

| | Example 1-1 | Example 1-2 | Example 1-3 | Example 1-4 | Comparative Example 1 | Comparative Example 2 |
|---|---|---|---|---|---|---|
| First layer | TiOₓ+ z(La₂O₃) | TiOₓ+ z(La₂O₃) | TiOₓ+ z(La₂O₃) | TiOₓ+ z(La₂O₃) | SiO₂ | SiO₂ |
| | n:2.1 | n:2.1 | n:2.1 | n:2.1 | n:1.46 | n:1.46 |
| | λ :0.5 | λ :0.1 | λ :0.16 | λ :0.08 | λ :0.10 | λ :0.10 |
| Second layer | | | SiO₂ | SiO₂ | TiOx+z(La₂O₃) | ZrO₂ |
| | ITO | ITO | n:1.46 | n:1.46 | n:2.1 | n:2.00 |
| | | | λ :0.28 | λ :0.08 | λ :0.16 | λ :0.16 |
| Third layer | *SiO*₂ | *SiO*₂ | Ti₃O₅ | Ti₃O₅ | SiO₂ | SiO₂ |
| | *n:1.46* | *n:1.46* | n:2.45 | n:2.45 | n:1.46 | n:1.46 |
| | *λ* :*0.25* | *λ* :*0.3* | λ :0.12 | λ :0.18 | λ :0.04 | λ :0.04 |
| Fourth layer | | | | SiO₂ | TiOx+ z(La₂O₃) | ZrO₂ |
| | | | ITO | n:1.46 | n:2.1 | n:2.00 |
| | | | | λ :0.07 | λ :0.25 | λ :0.25 |
| Fifth layer | | | *SiO₂* | Ti₃O₅ | *SiO*₂ | *SiO*₂ |
| | | | *n:1.46* | n:2.45 | *n:1.46* | *n:1.46* |
| | | | λ *:0.28* | λ :0.14 | *λ:0.24* | *λ :0.24* |
| Sixth layer | | | | ITO | | |
| Seventh layer | | | | *SiO*₂ | | |
| | | | | *n:1.46* | | |
| | | | | *λ :0.28* | | |

**[Table 1-2]**

| | Example 2-1 | Example 2-2 | Example 2-3 | Example 2-4 |
|---|---|---|---|---|
| First layer | LaTi_{(1+X)} | LaTi₍₁₊ₓ₎ | LaTi_{(1+X)} | LaTi₍₁₊ₓ₎ |
| | O_{(3-y)} | O_{(3-y)} | O_{(3-y)} | O_{(3-y)} |
| | n:2.1 | n:2.1 | n:2.1 | n:2.1 |
| | λ :0.5 | λ :0.1 | λ :0.16 | λ :0.08 |
| Second layer | | | SiO₂ | SiO₂ |
| | ITO | ITO | n:1.46 | n:1.46 |
| | | | λ :0.28 | λ :0.08 |
| Third layer | *SiO*₂ | *SiO*₂ | Ti₃O₅ | Ti₃O₅ |
| | *n:1.46* | *n:1.46* | n:2.45 | n:2.45 |
| | *λ :0.25* | *λ :0.3* | λ :0.12 | λ :0.18 |
| Fourth layer | | | ITO | SiO₂ |
| | | | | n:1.46 |
| | | | | λ :0.07 |
| Fifth layer | | | *SiO₂* | Ti₃O₅ |
| | | | *n:1.46* | n:2.45 |
| | | | *λ:0.28* | λ :0.14 |
| Sixth layer | | | | ITO |
| Seventh layer | | | | *SiO*₂ |
| | | | | *n:1.46* |
| | | | | λ :0.28 |

[Table 1-3]

| | Example 3-1 | Example 3-2 | Example 3-3 | Example 3-4 |
|---|---|---|---|---|
| First layer | LaTaOₓ | LaTaOₓ | LaTaOₓ | LaTaOₓ |
| | n:2.1 | n:2.1 | n:2.1 | n:2.1 |
| | λ:0.5 | λ :0.1 | λ:0.16 | λ :0.08 |
| Second layer | | | SiO₂ | SiO₂ |
| | ITO | ITO | n:1.46 | n:1.46 |
| | | | λ :0.28 | λ :0.08 |
| Third layer | *SiO*₂ | *SiO*₂ | Ti₃O₅ | Ti₃O₅ |
| | *n:1.46* | *n:1.46* | n:2.45 | n:2.45 |
| | *λ:0.25* | *λ :0.3* | λ :0.12 | λ :0.18 |
| Fourth layer | | | ITO | SiO₂ |
| | | | | n:1.46 |
| | | | | λ :0.07 |
| Fifth layer | | | *SiO*₂ | Ti₃O₅ |
| | | | *n:1.46* | n:2.45 |
| | | | *λ :0.28* | λ :0.14 |
| Sixth layer | | | | ITO |
| Seventh layer | | | | *SiO*₂ |
| | | | | *n:1.46* |
| | | | | *λ :0.28* |

Additionally, in this embodiment, a surface protective film is desirably formed on the optical inorganic thin film from the viewpoint of antifouling property.

As the surface protective film, a general-purpose film (e.g. KP-801 M produced by Shin-Etsu Chemical Co., Ltd.) can be used, however, the film is desirably composed of a material which comprises a coating agent containing a fluorine organic group-introduced silane compound having a silyl group reactive with a fluorine-modified organic group as a film component (main ingredient) and which has a water contact angle of 80° or larger.

The fluorine organic group-introduced silane compound has preferably antifouling property and abrasion resistance.

A film thickness of the surface protective film (oil and water repellent film) is usually 0.001-0.05 µm, preferably 0.001-0.03 µm, more preferably 0.001-0.02 µm. A case of the film thickness of the surface protective film being below 0.001 µm cannot be expected for the oil and water repellent property, and develops problems with abrasion resistance and chemical resistance. Also, in a case of over 0.05 µm, transmissivity is likely to decrease due to surface light scattering of the surface protective film.

As a surface protective agent (coating agent) comprising a fluorine organic group-introduced silane compound as a film component, specifically, an agent prepared by diluting a fluorine organic group-introduced silane compound "KY-130" produced by Shin-Etsu Chemical Co., Ltd. to an appropriate concentration with a fluorine-based solvent (e.g. HFE-7200 produced by Sumitomo 3M Limited, and FR thinner produced by Shin-Etsu Chemical Co., Ltd., etc.) can be used.

It does not matter if the method for forming the surface protective film is (a) dry processing method or (b) wet processing method mentioned below.

### (a) Dry processing method (Dry coating method)

The coating agent (surface protective agent) prepared by diluting a fluorine organic group-introduced silane compound to an appropriate concentration in a fluorine-based solvent is applied to a mass of the fibrous conductive substance, and heated under vacuum at 1-0.0001 Pa, thereby applied on the optical element to form the surface protective film (e.g. see JP No. H06-340966 A).

Desirably, the vacuum pressure in film formation is 1-0.0001 Pa, preferably 0.5-0.005 Pa, more preferably 0.1-0.001 Pa. When the vacuum pressure is over 1 Pa, a mean free path of the evaporated molecule is short, and thus an adequate film formation rate cannot be obtained, and when it is below 0.0001 Pa, the adequate rate can be obtained, but it takes a long time to obtain a vacuum state.

In addition, the film formation rate is 0.05-5.0 Å/s, preferably 0.1-2.0 Å/s. When the rate is less than 0.05 Å/s, productivity is low, and the cost of the film formation is high, and when it is more than 2.0 Å/s, an adequate film thickness distribution is hardly obtained. The film formation rate can be adjusted by controlling the vacuum pressure/heating temperature.

### (b) Wet processing method (Wet coating method)

The same surface protective agent is applied on the optical element, and then left under an atmosphere of humidity (RH) of 10-90% (desirably 20-80%) and temperature of 10-60°C (20-50°C) for a predetermined time to form a surface protective film. Although the predetermined time varies depending on a reaction rate of the surface protective agent and an atmosphere condition, it is usually 0.5-24 h (desirably 1-10 h).

The applying method may be any of dipping method, spin coating method, brush painting method, spray method and the like.

When the atmosphere humidity is too low, a reactive group can hardly obtain sufficient reactivity (by hydrolysis), conversely, when it is too high, the appearance is likely to be damaged.

In addition, when the atmosphere temperature is too low, reaction of the silane compound is slow, conversely, when it is too high, damage to the appearance such as a crack of the optical inorganic thin film and deformation of the optical element substrate are likely to be caused.

For example, the following method described in a product catalog of "fluorine coating agent KY-130" (Shin-Etsu Chemical Co., Ltd.) is taken.

"Diluted to an adequate concentration with a fluorine-based solvent (a suitable solvent such as HFE-7200 [produced by Sumitomo 3M Limited] and FR thinner [produced by Shin-Etsu Chemical Co., Ltd.]), and applied on the surface of the substrate by dipping, brush painting or the like, which is left under the following condition to harden the coating, then the surface is wiped by a dry cloth or the like.

· At room temperature and 40% humidity...for 24 hours or longer
· At 60°C and 80% humidity...for 2 hours or longer (recommended condition)" Examples

Hereinafter, Examples and Comparative Examples conducted for confirming the effects of the present invention will be detailed. A model sectional view indicating an optical basic constitution of Examples and Comparative Examples is shown in Fig. 1.

(1) For agents and optical substrates, the following materials were used.

### <Agents>

· TPEE "PESRESIN A-160P" (produced by TAKAMATSU OIL & FAT CO., LTD., polyester/polyether-type water-dispersible emulsion (aqueous), Solid content concentration: 27%)
· Titania-based oxide microparticle A "OPTOLAKE 1130F-2 (A-8)" (produced by JGC Catalysts and Chemical Ltd., Solid content concentration: 30%, Dispersed solvent: methyl alcohol)
· Titania-based oxide microparticle B "OPTOLAKE 1130Z (S-7G)" (produced by JGC Catalysts and Chemical Ltd., Solid content concentration: 20%, Dispersed solvent: methyl alcohol)

### <Optical inorganic thin film materials>

Examples 1-1, 1-2, 1-3: lanthanum titanate "Substance H4", produced by Merck KGaA
Examples 2-1, 2-2, 2-3: lanthanum titanate "OH14", produced by Canon Optron Inc.
Examples 3-1, 3-2, 3-3: lanthanum titanate "Substance H7", produced by Merck KGaA

### <Optical substrates (lens body)>

· Refractive index 1.60: "MR-20" (Mitsui Chemicals, Inc.)
· Refractive index 1.67: "MR-10" (Mitsui Chemicals, Inc.)
· Refractive index 1.74: "MR-174" (Mitsui Chemicals, Inc.)

As pretreatment, each substrate was soaked in a 10% sodium hydroxide aqueous solution at 40°C for 3 minutes, subsequently washed with water and dried for use.

(2) Each primer composition was prepared as below.

### <Primer composition 1>

Primer composition 1 was prepared by mixing 57 pts. of titania-based oxide microparticle "OPTOLAKE 1130Z (S-7G)", 350 pts. of methyl alcohol as a diluent, and 1 pt. of silicone-based surfactant "L-7001" in 100 pts. of commercial TPEE "PESRESIN A-160P", and stirring until it became homogeneous.

### <Primer composition 2>

Primer composition 2 was prepared in the same way as in Primer composition 1 except that the amount of the titania-based oxide microparticle "OPTOLAKE 1120Z (S-7, G)" was changed to 210 pts.

It should be noted that application of the primer compositions mentioned above and a hard coat composition mentioned below was conducted by a dipping method (raising rate: 105 mm/min.).

(3) Each hard coat composition was prepared as below.

### <Hard coat composition 1>

To 150 pts. of γ-glycidoxy propyl trimethoxysilane and 25 pts. of tetraethoxysilane, 150 pts. of methyl alcohol was added, to which 40 pts. of 0.01 N hydrochloric acid was dripped while stirring, and hydrolyzed all night and all day to prepare a hydrolysate.

Hard coat composition was prepared by mixing 170 pts. of titania-based oxide microparticle "OPTOLAKE 1130F-2 (A-8)", 1 pt. of silicone surfactant "L-7001" and 1.0 pt. of acetylacetone aluminum as a catalyst in the hydrolysate, and stirring it all night and all day.

### <Hard coat composition 2>

Hard coat composition 2 was prepared in the same way as in Hard coat composition 1 except that the amount of the titania-based oxide microparticle "OPTOLAKE 1130F-2 (A-8)" is changed to 350 pts.

(4) Each optical inorganic thin film (antireflective film (specified vapor-deposited film)/mirror film) was formed as below.

Ion cleaning was conducted by exhausting air until the pressure was decreased to 1.33x10⁻³ Pa or lower while the vacuum chamber was heated to 60°C, and then the antireflective film or the mirror film was formed by vacuum vapor deposition starting from the closest side to the substrate while being ion-assisted, so that it was constructed as shown in Tables 1-1, 1-2, 1-3.

The ion cleaning and ion-assisted deposition were conducted under the following condition.

### (Examples 1-1, 1-2, 2-1, 2-2, 3-1 and 3-2)

Temperature of the vacuum chamber: 60°C, Accelerating voltage: 1 kV, Amount of the introduced gas: Ar; 10 sccm, O₂; 10 sccm,
(Examples 1-3, 1-4, 2-3, 2-4, 3-3 and 3-4; Comparative Examples 1 and 2)
Temperature of the vacuum chamber: 60°C, Accelerating voltage: 500 kV, Amount of the introduced gas: O₂; 20 sccm,

(5) Each surface protective film was formed as below.

### 1) Preparation of the agent

The agent was prepared by diluting a fluorine coating agent (KY-130, produced by Shin-Etsu Chemical Co., Ltd.) with a fluorine-solvent (FR thinner, produced by Shin-Etsu Chemical Co., Ltd.) so that the solid content was 3%. The agent was put into an open-topped cylindrical container (Capacity: 16 mm inside diameter x 6 mm inside height) filled with 0.5 g of steel wool (produced by Nippon Steel Wool Co., Ltd., #0, Wire diameter: 0.025 mm) (amount of the filled agent: 1.0 g), and then dried at 120°C for 1 h.

### 2) Film formation

The container filled with the drug was set in a vacuum evaporator and vacuated to 0.01 Pa, then evaporated by a molybdenum resistance heating boat as a heat source at a film formation rate of 0.6 Å/s to form a 0.005 µm surface protective film on each surface of the elements to be processed.

(6) Each optical element (lens) of Examples/Comparative Examples was prepared as below.

A primer composition was applied to the lens substrates individually indicated (in Tables 2-1, 2-2 and 2-3), hardened at 100°C for 20 min., to which a hard coat composition was applied, hardened under condition of 120°C for 2 h to form primer coat/hard coat 12 and 14.

The lens with the primer coat/hard coat 12 and 14 was set on the rotatable lens dome, and an antireflective film 16 designed as shown in Tables 1-1, 1-2 and 1-3 was formed in each condition described above, then a surface protective film 18 was formed on the top surface in the condition described above.

(7) In relation to each Example/Comparative Example in which preparation was conducted as described above, physical/evaluation tests including the following items were carried out.

### <Test items>

### 1) Confirmatory test for initial swelling

Ten days after formation of the surface protective film, presence of swelling on the surface film was confirmed by visual check and a strainmeter (self-manufactured by the applicants). A case where the swelling was observed by both visual check and the strainmeter was designated as "Swelling: Yes", and others were designated as "Swelling: No".

### 2) Heat resistance test

Ten days after formation of the finishing composite film, each optical element (lens specimen) was evaluated for heat resistance by using "Perfect Oven" (Tabai Espec Corp.) as mentioned below.

The specimen was gradually heated from 60°C by 5°C increments, taking 5 min. at each temperature. Presence of cracks on the finishing composite film is visually checked, and a temperature immediately before generation of a crack was designated as a heatproof temperature.

### <Confirmation of effects>

Results of the tests are shown in Tables 2-1, 2-2 and 2-3.

The antireflective film had a specified vapor-deposited film, and Comparative Example 1 comprising 5-layered antireflective film which had no specified vapor-deposited film on the first layer (Conventional case) had a heat resistance equal to or somewhat superior to that of Examples 1-3 and 4 comprising 5-layered antireflective film which had the same specified vapor-deposited film on the first layer of the side of the substrate (multi-layer inorganic thin film), but both of them developed initial swellings.

It could also be confirmed that, among Examples, Examples 1-1, 1-2, 2-1, 2-2, 3-1 and 3-2 in which the ion cleaning-assisted deposition was conducted under the Ar/O₂ mixed gas had a heat resistance relatively superior to that of Examples 1-3, 1-4, 2-3, 2-4, 3-3 and 3-4 in which the ion cleaning-assisted deposition was conducted under the O₂ gas alone, and did not generate initial swelling despite a high voltage of 1 kV during ion cleaning-assisted deposition.

[Table 2-1]

| | Refractive index of lens | Primer composition | Hard coat composition | Heatproof temperature | Swelling |
|---|---|---|---|---|---|
| Example 1-1 | 1.6 | 1 | 1 | 150°C | No |
| | 1.67 | 2 | 2 | 135°C | No |
| | 1.74 | 2 | 2 | 140°C | No |
| Example 1-2 | 1.6 | 1 | 1 | 150°C | No |
| | 1.67 | 2 | 2 | 135°C | No |
| | 1.74 | 2 | 2 | 140°C | No |
| Example 1-3 | 1.6 | 1 | 1 | 135°C | No |
| | 1.67 | 2 | 2 | 125°C | No |
| | 1.74 | 2 | 2 | 125°C | No |
| Example 1-4 | 1.6 | 1 | 1 | 135°C | No |
| | 1.67 | 2 | 2 | 125°C | No |
| | 1.74 | 2 | 2 | 125°C | No |
| Comparative Example 1 | 1.6 | 1 | 1 | 140°C | YES |
| | 1.67 | 2 | 2 | 125°C | YES |
| | 1.74 | 2 | 2 | 125°C | YES |
| Comparative Example 2 | 1.6 | 1 | 1 | 85°C | No |
| | 1.67 | 2 | 2 | 85°C | No |
| | 1.74 | 2 | 2 | 85°C | No |

[Table 2-2]

| | Refractive index of lens | Primer composition | Hard coat composition | Heatproof temperature | Swelling |
|---|---|---|---|---|---|
| Example 2-1 | 1.6 | 1 | 1 | 150°C | No |
| | 1.67 | 2 | 2 | 135°C | No |
| | 1.74 | 2 | 2 | 140°C | No |
| Example 2-2 | 1.6 | 1 | 1 | 150°C | No |
| | 1.67 | 2 | 2 | 135°C | No |
| | 1.74 | 2 | 2 | 140°C | No |
| Example 2-3 | 1.6 | 1 | 1 | 135°C | No |
| | 1.67 | 2 | 2 | 125°C | No |
| | 1.74 | 2 | 2 | 125°C | No |
| Example 2-4 | 1.6 | 1 | 1 | 135°C | No |
| | 1.67 | 2 | 2 | 125°C | No |
| | 1.74 | 2 | 2 | 125°C | No |

[Table 2-3]

| | Refractive index of lens | Primer composition | Hard coat composition | Heatproof temperature | Swelling |
|---|---|---|---|---|---|
| Example 3-1 | 1.6 | 1 | 1 | 150°C | No |
| | 1.67 | 2 | 2 | 135°C | No |
| | 1.74 | 2 | 2 | 140°C | No |
| Example 3-2 | 1.6 | 1 | 1 | 150°C | No |
| | 1.67 | 2 | 2 | 135°C | No |
| | 1.74 | 2 | 2 | 140°C | No |
| Example 3-3 | 1.6 | 1 | 1 | 135°C | No |
| | 1.67 | 2 | 2 | 125°C | No |
| | 1.74 | 2 | 2 | 125°C | No |
| Example 3-4 | 1.6 | 1 | 1 | 135°C | No |
| | 1.67 | 2 | 2 | 125°C | No |
| | 1.74 | 2 | 2 | 125°C | No |

### Description of the Symbols

- 10: Optical element substrate (Lens body)
- 12: Primer coat
- 14: Hard coat
- 16: Optical inorganic thin film (Antireflective film or mirror film)
- 18: Surface protective film

## Claims

1. An optical element which comprises a multi-layer optical inorganic thin film on an optical element substrate in order to decrease or increase a reflectance, wherein a first layer (starting from the closest side to the optical element substrate: the same shall apply hereafter.) of the optical inorganic thin film is a vapor-deposited film (hereinafter called "specified vapor-deposited film") composed of either 1) a mixture or compound of La oxide and Ti oxide, or 2) a mixture or compound of La oxide and Ta oxide and shows a refractive index n_{D}=1.95-2.25, and the final layer is to be a vapor-deposited film comprising SiO₂, and a middle layer composed of a single or multi-layered vapor-deposited film which comprises one metal oxide selected from a group consisting of ITO (indium tin oxide) and oxides of Group 4 and 5 elements in the fourth to sixth periods is included in the inner side of the final layer.

2. The optical element according to claim 1, wherein the mixture or compound of the La oxide and the Ti oxide is represented by TiOₓ + z (La₂O₃) (wherein x is 1.5-1.8, and z is 10-65 mass% to the total mass of the mixture).

3. The optical element according to claim 1, wherein a sintered mixture or compound of the La oxide and the Ti oxide is represented by LaTi₍₁₊ₓ₎O_{(3-y)} (wherein 0<x≤0.2, 0.3≤y≤0.7).

4. The optical element according to claim 1, wherein a sintered mixture or compound of the La oxide and the Ta oxide is represented by LaₘTaₙOₓ (multiple oxide).

5. The optical element according to any one of claims 1 to 4, wherein the middle layer between the first layer and the final layer has at least one layer of the vapor-deposited film comprising ITO.

6. The optical element according to claim 5, wherein, on the optical element substrate, the optical inorganic thin film is formed on the hard coat via, or not via the primer coat.

7. The optical element according to claim 6, wherein the primer coat is composed of a primer composition based on a urethane or polyester thermoplastic elastomer.

8. The optical element according to claim 6 or 7, wherein the hard coat is composed of a hard coat composition prepared by adding a catalyst and a metal oxide microparticle (composite microparticle) to a hydrolysate of organoalkoxysilane.

9. The optical element according to any one of claims 1 to 8, wherein a surface protective film (water repellent/antifouling film) is formed on the optical inorganic thin film.

10. The optical element according to claim 9, wherein the surface protective film is composed of a fluorine organic group-introduced silane compound which has a silyl group reactive with a fluorine-modified organic group.

11. A manufacturing method of the optical element described in any one of claims 1 to 10, wherein at least the specified vapor-deposited film is formed by ion-assisted vacuum vapor deposition, and the film formation is under a deposition condition; heating temperature: 25-120°C, O₂: 1-20 sscm, and accelerating voltage of ion gun: 100-1200 V.
